(19) Europäisches Patentamt
European Patent Office
Office européen des brevets

(11) Publication number: 0 129 762
A2

(12) EUROPEAN PATENT APPLICATION

(21) Application number: 84106643.4

(22) Date of filing: 09.06.84

(51) Int. Cl.[4]: C 08 L 71/04
C 08 L 25/04, C 08 K 5/00

(30) Priority: 22.06.83 US 506777

(43) Date of publication of application:
02.01.85 Bulletin 85/1

(84) Designated Contracting States:
DE FR GB IT NL

(71) Applicant: GENERAL ELECTRIC COMPANY
1 River Road
Schenectady New York 12305(US)

(72) Inventor: Haaf, William Robert
19 Scotch Pine Drive
Woorheesville New York 12186(US)

(72) Inventor: Lee, Gim Fun, Jr.
11 Drawbridge Drive
Albany New York 12203(US)

(74) Representative: Catherine, Alain
GETSCO 42, avenue Montaigne
F-75008 Paris(FR)

# (54) Polyphenylene ether resin compositions containing halogenated aromatic compound alone as a flame retardant agent.

(57) Flame retardant compositions comprising admixtures of polyphenylene ether resin, a polyalkenyl aromatic and as the sole flame retardant agent, a halogenated aromatic compound or mixture of such compounds, are described. These provide decided advantages over corresponding flame retardant compositions containing synergistic agents and/or aromatic phosphate flame retardants, alone, or in combination with halogenated aromatics. They are useful for shaping into a wide variety of articles for industrial or household purposes.

EP 0 129 762 A2

Croydon Printing Company Ltd

# POLYPHENYLENE ETHER RESIN COMPOSITIONS CONTAINING HALOGENATED AROMATIC COMPOUND ALONE AS A FLAME RETARDANT AGENT

## BACKGROUND OF THE INVENTION

The polyphenylene ether resins are an established family of engineering thermoplastics known to be suitable for thermal shaping, as by extruding or molding, into various articles for commercial use. The patent literature is replete with descriptions of these polymers and procedures by which they can be prepared. Notable among these are U.S. Patent Nos. 3,306,874 and 3,306,875 (Allan S. Hay), and U.S. Patent Nos. 3,257,357 and 3,257,358 (Gelu S. Stamatoff).

Compositions of polyphenylene ether resin and styrene polymers as well as articles molded from them are normally flammable, and for many applications it is desirable to impart flame retardancy and thus decrease the flammability by incorporating suitable additives for that purpose. Among these are halogenated aromatic compounds, a wide variety of which are known to be flame retardant. The prevailing practice, however, has been to use halogenated aromatics in combination with synergistic agents such as antimony compounds, or in combination with other flame retardant agents such as aromatic phosphates.

For instance, U.S. Patent No. 3,639,506 (Haaf) discloses flame retardant blends of polyphenylene ether resin, high impact polystyrene, and as a flame retardant additive a combination of an aromatic phosphate compound and a halogenated aromatic compound. Specific examples of combination flame retardant additives are triphenyl phosphate together with a chlorinated biphenyl; triphenyl phosphate together with decabromodiphenyl carbonate; triphenyl phosphate together with brominated biphenyl/biphenyl ether; and triphenyl phosphate together with 4,4'-dibromodiphenyl.

Reinhard, in U.S. Patent No. 3,809,729, discloses flame retardant blends of polyphenylene ether resin (or polycarbonate resin), rubber modified high impact polystyrene, and a flame retardant combination of hexabromobenzene and an antimony compound, e.g., antimony oxide.

Lee, Jr., in U.S. Patent No. 4,203,931, describes other flame retardant blends of polyphenylene ether resin and high impact polystyrene in which a halogenated aromatic, e.g., decabromodiphenyl oxide, and an antimony compound, e.g., antimony oxide, are used together for purposes of decreasing the flammability.

Also representative of what has been disclosed is U.S. Patent No. 4,355,126 (Haaf and Reinhard), which describes flame retardant blends of polyphenylene ether resin, high impact polystyrene, and various combinations of halogenated aromatic compounds, aromatic phosphates and antimony compounds. Examples shown include a mixture of tetrabromobisphenol-A and antimony oxide, with or without triphenyl phosphate, also including polytetrafluorethylene to retard dripping; a mixture of hexabromobenzene, triphenyl phosphate and antimony oxide; and a mixture of triphenyl phosphate and a highly chlorinated diphenyl.

An additional disclosure of polyphenylene ether-polystyrene compositions which can be rendered flame retardant,such as by the addition of flame retardant agents in accordance with the foregoing,is set forth in U.S. Patent No. 3,383,435 (Eric P. Cizek).

## INTRODUCTION TO THE INVENTION

It has now been discovered that aromatic halogen compounds, in the absence of synergists such as antimony oxide or the like or other flame retardant agents such as triphenyl phosphate or the like, are effective to reduce the flammability of polyphenylene ether/polyalkenyl aromatic resin blends.

This invention avoids the undesirable effects associated with the use of synergists such as antimony oxide, which adversely affects the thermal stability of halogenated compounds, a problem of great concern when attempts are made to incorporate these additives into the polymer blends at the high temperatures typical for compounding.

The interaction of halogenated flame retardants with synergists such as antimony oxide also often appears to cause detrimental effects such as unsightly color formation and loss of impact strength in the blends, and these too are avoided with the present composition.

Another advantage of this invention is that the heat distortion temperature of the composition is less adversely affected in comparison with a corresponding blend in which a plasticizing synergist -- an aromatic phosphate such as triphenyl phosphate -- is used for flame retardancy. This enables higher heat distortion temperature (HDT) for a given polyphenylene ether/polyalkenyl aromatic blend, and as a result, the molded or otherwise shaped part has greater resistance to deformation upon exposure to elevated temperatures.

DESCRIPTION OF THE INVENTION

In its broadest aspects, the invention thus comprises flame retardant thermoplastic compositions of (a) a polyphenylene ether resin, (b) a polyalkenyl aromatic, and (c) a minor, flame retardant amount of one or more halogenated aromatic compounds, this being the only flame retardant improving or enhancing additive or agent in the composition.

The polyphenylene ether resin, which together with the polyalkenyl aromatic comprise the principal polymeric components, as well as the major portion of the composition, is preferably a homopolymer or copolymer containing one or more units of the formula

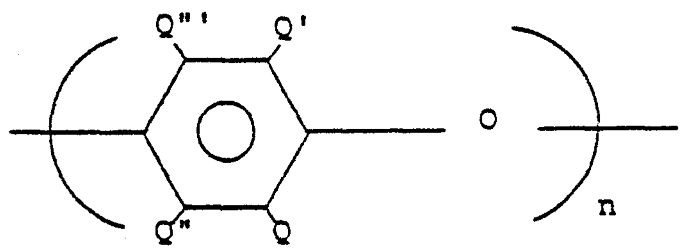

wherein Q, Q', Q" and Q"' are independently selected from the group consisting of hydrogen, halogen, hydrocarbon, halohydrocarbon, hydrocarbonoxy, and halohydrocarbonoxy; and n represents the total number of monomer units and is an integer of at least about 20, and more usually at least 50.

The polyphenylene ether resin can be prepared in accordance with known procedures, such as those described in the above mentioned patents of Hay and Stamatoff, from the reaction of phenols including but not limited to: 2,6-dimethylphenol; 2,6-diethylphenol; 2,6-dibutylphenol; 2,6-dilaurylphenol; 2,6-dipropylphenol; 2,6-diphenylphenol; 2-methyl-6-ethylphenol; 2-methyl-6-cyclohexylphenol; 2-methyl-6-tolylphenol; 2-methyl-6-methoxyphenol; 2-methyl-6-butylphenol; 2,6-dimethoxyphenol; 2,3,6-trimethylphenol; 2,3,5,6-tetramethylphenol; and 2,6-diethoxyphenol.

Each of these may be reacted alone to produce the corresponding homopolymer, or with another phenol to produce the corresponding copolymer having varied units within the above formula. Special mention is made of 2,6-dimethylphenol and its corresponding polymer, poly(2,6-dimethyl-1,4-phenylene) ether; and of 2,6-dimethylphenol used in conjunction with other phenols, such as 2,3,6-trimethylphenol, 2-methyl-6-butylphenol, etc., and their corresponding copolymers, such as poly(2,6-dimethyl-co-2-methyl-6-butyl-1,4-phenylene)ether, etc.

For purposes of the present invention, an especially preferred family of polyphenylene ethers include those having alkyl substitution in the two positions ortho to the oxygen ether atom, i.e., those of the above formula wherein Q and Q' are alkyl, most preferably having from 1 to 4 carbon atoms. Illustrative members of this class are: poly(2,6-dimethyl-1,4-phenylene)ether; poly-(2,6-diethyl-1,4-phenylene)ether; poly(2-methyl-6-ethyl-1,4-phenylene)ether; poly(2-methyl-6-propyl-1,4-phenylene) ether; poly(2,6-dipropyl-1,4-phenylene)ether; poly(2-ethyl-6-propyl-1,4-phenylene)ether; and the like.

The most preferred polyphenylene ether resin for purposes of the present invention is poly(2,6-dimethyl-1,4-phenylene)ether.

The polyalkenyl aromatics, useful for component (b) of the present compositions, are likewise well known. The terminology "polyalkenyl aromatic" is employed in this disclosure to refer to not only homopolymers, but also copolymers, terpolymers, etc., derived from or based on alkenyl aromatic compounds of the formula

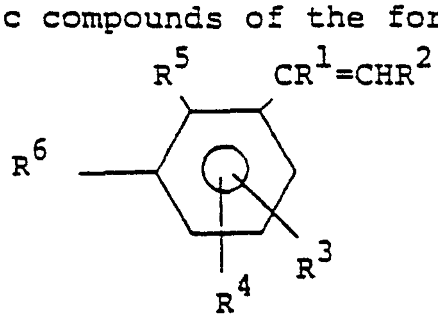

wherein $R^1$ and $R^2$ are selected from the group consisting of lower alkyl or alkenyl groups of from 1 to 6 carbon atoms and hydrogen; $R^3$ and $R^4$ are selected from the group consisting of chloro, bromo, hydrogen and lower alkyl of from 1 to 6 carbon atoms; $R^5$ and $R^6$ are selected from the group consisting of hydrogen and lower alkyl and alkenyl groups of from 1 to 6 carbon atoms, or $R^5$ or $R^6$ may be concatenated together with hydrocarbyl groups to form a naphthyl group. These compounds are also desirably free of any substituent that has a tertiary carbon atom.

Specific examples of alkenyl aromatic compounds (monomers) include styrene, chlorostyrene, alpha-methylstyrene, para-methyl styrene, vinyl xylene, divinylbenzene and vinyl naphthalene. Styrene is particularly preferred.

Thus, component (b) may be polystyrene, polychlorostyrene, poly(alpha-methylstyrene), poly(paramethyl styrene) poly(vinyl xylene), copolymers of styrene and maleic anhydride, etc.

As is also known to those skilled in the art polyalkenyl aromatic resins can be admixed with rubber to improve the impact strength, or modifiers such as butadiene may actually be incorporated into the alkenyl aromatic resins to give an impact resistant polymer. These include graft-modified polyalkenyl aromatic resins, block and hydrogenated block copolymers of styrene and butadiene, radial teleblock and hydrogenated radial teleblock copolymers of styrene, butadiene and a central coupling agent, rubber modified copolymers of styrene and maleic anhydride, rubber modified high impact polystyrene, known in the art as "HIPS", and similarly rubber modified poly(alpha-methylstyrene) or rubber modified poly(para-methyl styrene), as well as numerous others described in the body of patent literature concerning polyphenylene ether/polyalkenyl aromatic resin compositions. Any of these is useful in the present compositions.

Components (a) and (b) are admixable in widely variant proportions ranging typically from 99:1 to 1:99 as a weight ratio of a:b. Particular amounts will depend on specific needs, but in the preferred embodiments these components will usually be present in a weight ratio within the range between 90:10 and 10:90, more often between 80:20 and 20:80, and most often between 30:70 and 70:30.

As previously explained, the only flame retardant additive or agent present in the compositions of this invention is a halogenated aromatic compound or compounds, and more specifically, one or more halogenated aromatic compounds of the formula

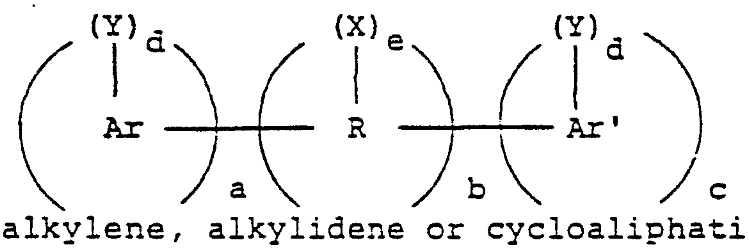

where R is alkylene, alkylidene or cycloaliphatic, for example, methylene, ethylene, propylene, isopropylene, butylene, isobutylene, amylene, cyclohexylene, cyclopentylidene, and so forth; a linkage selected from among the group ether, carbonyl, amine and carbonate; a sulfur containing linkage, for example, sulfide, sulfoxide or sulfone; or a phosphorus containing linkage; and in addition, two or more alkylene or alkylidene linkages connected by such groups as aromatic, amino, ether, carbonyl, sulfide, sulfoxide, sulfone or a phosphorus containing linkage.

Ar and Ar' can be the same or different and are monocyclic or polycyclic aromatic groups, such as phenylene, biphenylene, terphenylene or naphthylene.

Y is a substituent selected from halogen, that is, chlorine, bromine, iodine or fluorine, ether groups of the general formula OE, where E is a monovalent hydrocarbon; monovalent hydrocarbon groups of the types represented by R above; nitro; cyano; and a cyclic anhydride

or cyclic imide linkage attached to two adjacent positions on the ring, especially when b and c, above, are zero; provided at least one Y is always halogen.

X is a monovalent hydrocarbon group exemplified by the following: alkyl, such as methyl, ethyl, propyl, isopropyl, butyl, decyl, and the like; aryl, such as phenyl, naphthyl, biphenyl, xylyl, tolyl, and the like; aralkyl such as benzyl, ethylphenyl, and the like; cycloaliphatic, such as cyclopentyl, cyclohexyl, and the like, as well as monovalent hydrocarbon groups containing inert substituents therein.

Where more than one X or one Y are used in the above formula, they may be the same or different.

The letters a, b and c represent zero or whole numbers from 1 and up, and can vary subject to the following provisos: when b is not 0, neither is a nor c; otherwise either a or c, but not both, may be 0; and where b is 0, the aromatic groups Ar and Ar', are joined by a direct carbon-carbon bond. The letter d represents the total number of substituents on the aromatic rings and is, independently, a whole number ranging from 1 to the maximum number of replaceable hydrogen atoms. The letter e represents the total number of substituents for R and is zero or a whole number ranging from 1 to the maximum number of replaceable hydrogen atoms on R.

It should be noted that the Y substituents on each of the aromatic groups, Ar and Ar', can be varied in the ortho, metha or para positions and these can be in any possible geometric relationship with respect to each other.

Included within the scope of the above formula are halogenated biphenols, of which the following are illustrative:

2,2-bis(3,5-dichlorophenyl)-propane
bis-(2-chlorophenyl)-methane
bis-(2,6-dibromophenyl)-methane
1,1-bis-(4-iodophenyl)-ethane
1,2-bis-(2,6-dichlorophenyl)-ethane
1,1-bis-(2-chloro-4-iodophenyl)-ethane
1,1-bis-(2-chloro-4-methylphenyl)-ethane
1,1-bis(3,5-dichlorophenyl)-ethane
2,2-bis-(3-phenyl-4,4-bromophenyl)-ethane
2,6-bis(4,6-dichloronaphthyl)-propane
2,2-bis-(2,6-dichlorophenyl)-pentane
2,2-bis(3,5-dichlorophenyl)-hexane
bis-(4-chlorophenyl)-phenyl-methane
bis-(3-nitro-4-bromophenyl)-methane
bis-(4-hydroxy-2,6-dichloro-3-methoxyphenyl)-methane
2,2-bis(3,5-dichloro-4-hydroxyphenyl)-propane
2,2-bis-(3-bromo-4-hydroxyphenyl)-propane.

Also included within the formula are halogen-containing benzenes as exemplified by 1,3-dichlorobenzene; 1,3-dibromobenzene, 1,4-dichlorobenzene; 1,4-dibromobenzene; 1,3,5-trichlorobenzene; 1,3,5-tribromobenzene; tetrachlorobenzene; pentachlorobenzene; hexachlorobenzene; tetrabromobenzene; pentabromobenzene; hexabromobenzene; 1,3-dichloro-4-hydroxybenzene; 1,3-dibromo-4-hydroxybenzene; as well as biphenyls such as 2,2'-dichlorobiphenyl; 2,2'-dibromobiphenyl; 2,4'-dichlorobiphenyl; 2,4'-dibromobiphenyl; 2,2',4,4'-tetrachlorobiphenyl; 2,2',4,4'-tetrabromobiphenyl, and so forth.

Still within the above formula are halogenated biphenyl ethers, such as 2,2'-dichlorodiphenyl oxide; 2,2'-dibromodiphenyl oxide; 2,4'-dichlorodiphenyl oxide, 2,4'-dibromodiphenyl oxide, 2,2',4,4'-tetrachlorodiphenyl oxide; 2,2',4,4'-tetrabromodiphenyl oxide; octachlorodiphenyl oxide; octabromodiphenyl oxide; decachlorodiphenyl oxide; and decabromodiphenyl oxide.

Still further within the scope of the formula are halogenated diphenyl carbonates, including 2,2'-dichlorodiphenyl carbonate; 2,2'-dibromodiphenyl carbonate; 2,4'-dichlorodiphenyl carbonate; 2,4'-dibromodiphenyl carbonate; 2,2',4,4'-tetrachlorodiphenyl carbonate; 2,2',4,4'-tetrabromodiphenyl carbonate; hexachlorodiphenyl carbonate, hexabromodiphenyl carbonate; octachlorodiphenyl carbonate; octabromodiphenyl carbonate; decachlorodiphenyl carbonate; and decabromodiphenyl carbonate.

Additional compounds represented by the above formula and, like the others mentioned, useful for the practice of this invention include halogenated, e.g., chlorinated or brominated, carboxylic acid anhydrides or imides, and especially phthalic acid anhydride or phthalimide having from one to four chloro- or bromo substituents on the ring, for example, mono-, di-, tri- or tetrachloro or mono-, di-, tri- or tetrabromo.

Many of these compounds are available from chemical manufacturers or supply houses, and others can be prepared by following procedures described in the literature, such as U.S. 3,639,506, which has already been referred to. They are useful individually or in admixture with one another in the present compositions.

Only minor amounts, for example, from about 1 to about 25 parts per 100 parts by (a) and (b) together, of component (c) are needed to achieve good flame retardancy for most purposes. Preferably, the described flame retardant agent is incorporated in the compositions in a proportion varying between 3 and about 15 parts, per 100 parts of (a) and (b) combined. Adjustment of the amount to suit the requirements for a given case is within the ability of those skilled in the art.

As emphasized, the described halogenated aromatic compound, or a mixture of two or more such compounds, is employed as the only flame retardant additive. Other additives such as antimony or molybdenum compounds known to enhance the flame retardancy effect, or additional flame retardant agents such as aromatic phosphates, etc., are absent from the present compositions.

The compositions which have been described are preferably prepared first by fine admixtures of their ingredients, in a mechanical blender, followed desirably by melt blending which can be accomplished by coextrusion. A substantially homogeneous admixture is preferred.

After they have been prepared, the present compositions may be used for any of the various purposes for which polyphenylene ether/polyalkenyl aromatic resin compositions have already been employed. For instance, they can be utilized in molding powder formulations, either alone or mixed with other polymers such as polyolefin, and they may contain in addition various fillers, such as clay, carbon black, silica, titanium dioxide, talc, mica, etc., or reinforcing agents such as glass fibers, flakes or spheres, titanate whiskers, etc., to make molded parts such as impact parts, gaskets, valve seats for oil and gas systems or other flammable chemical fluids.

They can also be used to prepare molded, calendered, or extruded articles, films, coatings, threads, filaments, tapes and the like. They can be applied to a wide spectrum of uses in the form of sheets, rods, tapes, etc., and are useful in electrical applications, such as in cable terminals, junction boxes, backing for electrical circuits, as components of dynamoelectric machines that operate at high temperatures, and for other cases where good resistance to burning is a desirable characteristic. Laminates made of these compositions are useful for panel boards for printed circuits, electrical

appliance panels, radio and television panels, etc.

As a coating material, they can be applied as a solution or suspension to any convenient foundation or substrate where a surface possessing their properties is desired.

The present compositions can also be mixed with various other modifying agents, such as dyes, pigments, stabilizers, non-flame retardant plasticizers, processing aids, fillers, reinforcing agents (e.g., glass) etc., in conventional amounts, for example, from about 0.1 to about 50% by weight of the total composition. This may be performed in a conventional manner.

DESCRIPTION OF THE SPECIFIC EMBODIMENTS

For purposes of illustrating preferred or best embodiments, the following examples are set forth. As will occur to those skilled in the art, many variations are possible without departing from the spirit and scope of the invention.

EXAMPLE 1

Using a 50:50 by weight admixture of poly(2,6-dimethyl-1,4-phenylene ether) resin (PPO®, General Electric Co.) and rubber modified high impact polyphenylene (Amoco's 6H6), the flame retardant agents noted below were added using a Brabender single screw extruder for compounding; temperature 580°F. The extrudate was collected, cut into pellets and molded into test pieces using a 4 ounce Newbury injection molding machine; injection temperature 530°F., mold temperature 170°F. The test pieces were evaluated for flame retardancy and other physical properties as shown in the Table.

TABLE 1

| Sample No. | FR Additive | Amt. phr | Tensile yield,psi | Elongation, % | Notched Izod Imp.Str., ft.lb./in. | Gardner Imp.Str., in.lbs. | HDT, °F. | UL 94 Burn Times (1/8" section), sec. |
|---|---|---|---|---|---|---|---|---|
| 1* | None | -- | 9,500 | 70 | 4.0 | 160 | 265 | Drips at 37 |
| 2** | Isopropylated triphenyl phosphate | 6 | 8,700 | 35 | 3.8 | 110 | 226 | 4.4/13.6 |
| 3 | Decabromodi-phenyl oxide | 6 | 9,900 | 33 | 3.8 | 170 | 257 | 16.7/7.6 |
| 4 | Hexabromodi-phenyl oxide | 6 | 10,000 | 31 | 1.7 | 100 | 240 | 32.4/7.4 |

* control; no flame retardant agent present

** comparison experiment

HDT = Heat distortion temperature

UL 94 = Underwriters Laboratories Test Bulletin No. 94 (self-extinguishing times)

The flame retardancy of the control, Sample 1, is poor. The addition of triphenyl phosphate, Sample 2, improves this property, but there is a decrease in the heat distortion temperature (HDT) from 265°F. to 226°F. Samples 3 and 4, in accordance with the invention, exhibit improved flame retardancy in comparison with the control, and better retention of the HDT in comparison with Sample 2

EXAMPLE 2

Using, in this instance, a 50:50 weight ratio of poly(2,6-dimethyl-1,4-phenylene ether) resin and Cosden's 825 TV high impact polystyrene (containing about 8% rubber), but the same procedure as in the previous example, the additives noted below were incorporated and the resultant blends were molded to give the results indicated.

TABLE 2

| Sample No. | FR Additive | Amt. phr. | UL-94 Burn Times, sec. |
|---|---|---|---|
| 5 | HBB | 6 | (1/8") <1/1,<1/<1, 2/8,<1/<1. (1/16") <1/3,<1/<1, 2/6, 1/4, 2/5, <1/2, 2/3. |
| 6 | BR Dow | 6 | (1/8") 2/1,4/3,3/1,<1/<1,4/2, <1/2, 3/<1,6/2,4/2,3/4. (1/16") 10/14drips,25/12,11/6, 14/12,12/15,20/10,13/5,12/5, 6/14,8/7. |
| 7* | None | -- | Burned completely, with dripping |

* control experiment

HBB = hexabromobenzene

BR Dow = brominated Dowtherm, a brominated mixture of diphenyl and diphenyl ether (75% aromatic bromine) supplied by Michigan Chemical Co., a division of Velsicol Corp. (now part of Great Lakes Chemicals).

EXAMPLE 3

Additional compositions in accordance with the invention were prepared by forming an admixture of 50 parts by weight of poly(2,6-dimethyl-1,4-phenylene ether) resin, 50 parts by weight of high impact polystyrene (Cosden's 825-TV), and the additives noted below in the amounts stated, extruding the admixture at 560-580°F. on either a 1-inch or 3/4-inch Wayne laboratory type extruder, and molding into test pieces on a 6-ounce Van Dorn injection molding machine. The properties are reported in the Table.

TABLE 3

| Sample No. | Fr Additive | Amt. phr | 1/8" UL 94 Self-Extinguishing Times, sec. | HDT under loat at 264 psi, in °F. |
|---|---|---|---|---|
| 8 | Tetrabromo phthalic anhydride | 6.25 | 4/1,3/1,5/4,1/3,6/2,5/2,6/1,4/1,3/2,2/1. | 261 |
| 9 | Same | 4.0 | 4/7,25/7,3/2,5/37,2/8,4/4,17/7,7/3,10/2,2/3. | 253 |
| 10 | Tetrabromo phthalimide | 6.15 | 5/2,15/2,3/2,4/1,6/2,2/3,3/3,2/1,3/2,5/1. | 255 |
| 11 | Decabromodi-phenyl car-bonate | 5.35 | 3/5,5/2,5/3,2/5,11/3,12/4,2/2,2/2,2/3,1/1 | -- |
| 12 | Chlorinated biphenyl | 9.2 | 22/45,14/22,13/25,26/26,19/20,32/1,15/9,15/33, 25/26,14/26,15/27,25/32,30/4,10/22,15/19. | -- |
| 13 | BR Dow (see Table 2) | 6.0 | 2/1,4/3,3/1,1/1,4/2,1/2,3/1,6/2,4/2,3/4. | 259 |
| 14 | CD 140* | 6.0 | 5/2,25/3,4/3,5/5,7/5,8/1,5/8,12/12,7/7,7/9 | 255 |
| 15 | Decachloro-diphenyl carbonate | 9.85 | 7/3,3/3,6/8,5/3,6/2,6/1,4/2,5/3,5/1,4/3. | -- |
| 16 | Same | 5.0 | 44/13,20/40,29/18,70/1,84/1. | -- |
| 17 | Same | 7.5 | 9/8,10/10,10/51,22/4,12/12,24/10,26/32,6/11, 1/38,11/7. | 246 |

* CD 140 is a developmental brominated aromatic compound containing 68-70% Br, from GAF Corp.

TABLE 3 (cont'd.)

| Sample No. | Notched Izod Imp.Str., ft.lbs./in. | Tensile yield, psi | Tensile Ultimate, psi | Elongation, % |
|---|---|---|---|---|
| 8 | 0.58 | 10,600 | 8,700 | 21.4 |
| 9 | 0.29 | -- | 11,800 | 8.6 |
| 10 | 0.93 | 9,600 | 8,000 | 22.9 |
| 11 | -- | -- | -- | -- |
| 12 | -- | -- | -- | -- |
| 13 | 1.22 | -- | -- | -- |
| 14 | 0.72 | -- | -- | -- |
| 15 | -- | -- | -- | -- |
| 16 | -- | -- | -- | -- |
| 17 | 0.46 | -- | 13,000 | 7.1 |

All of the above mentioned patents are incorporated herein by reference.

Other modifications and variations of the invention are possible in the light of the above description. For instance, instead of poly(2,6-dimethyl-1,4-phenylene ether)resin, a copolymer such as poly(2,6-dimethyl-co-2,3,6-trimethyl-1,4-phenylene ether) resin may be used. Instead of high impact polystyrene (HIPS), other impact modifying styrenic polymers such as di- or triblock copolymers of styrene and butadiene (e.g., the Kraton® and Kraton®G polymers from Shell Chemical Co.), radial teleblock copolymers of styrene and butadiene (the Solprene® polymers from Phillips Chemical Co.), EPDM rubber modified polystyrene, or multi-block copolymers of other types (e.g., Firestone's Stereon® products) may be substituted. Glass reinforced or mineral filled embodiments are also possible. Thus, the invention may be practiced by use of additional variants without departing from the scope defined by the appended claims.

CLAIMS

1. A flame retardant thermoplastic composition, comprising a normally flammable blend of (a) a polyphenylene ether resin and (b) a poly(alkenyl aromatic); and

(c) a minor, flame retardancy improving amount of a halogenated aromatic flame retardant compound or compounds in the absence of any synergist or other flame retardant agent.

2. A composition according to Claim 1, in which the polyphenylene ether resin is a homopolymer or copolymer comprising units of the formula

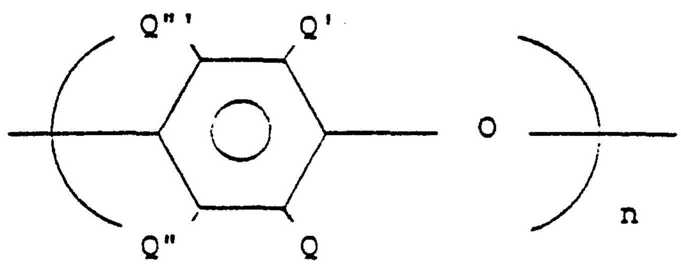

wherein Q, Q', Q" and Q"' are independently selected from the group consisting of hydrogen, halogen, hydrocarbon, halohydrocarbon, hydrocarbonoxy, and halohydrocarbonoxy; and n represents the total number of monomer units and is an integer of at least about 20.

3. A composition according to Claim 1, in which the polyphenylene ether resin is poly(2,6-dimethyl-1,4-phenylene ether) resin.

4. A composition according to Claim 1, in which the poly(alkenyl aromatic) is derived from a compound of the formula

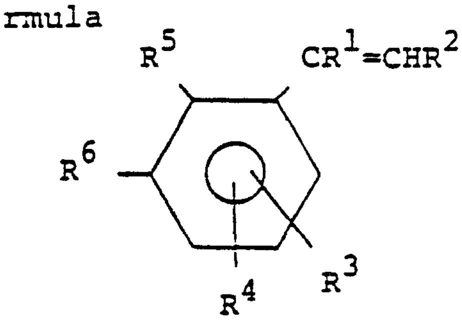

wherein $R^1$ and $R^2$ are selected from the group consisting of lower alkyl or alkenyl groups of from 1 to 6 carbon atoms and hydrogen; $R^3$ and $R^4$ are selected from the group consisting of chloro, bromo, hydrogen and lower alkyl of from 1 to 6 carbon atoms; $R^5$ and $R^6$ are selected from the group consisting of hydrogen and lower alkyl and alkenyl groups of from 1 to 6 carbon atoms, or $R^5$ or $R^6$ may be concatenated together with hydrocarbyl groups to form a naphthyl group.

5. A composition according to Claim 1, in which the poly(alkenyl aromatic) is a styrene homopolymer, copolymer or terpolymer.

6. A composition according to Claim 1, in which the poly(alkenyl aromatic) is a rubber modified high impact polystyrene homopolymer, copolymer or terpolymer.

7. A composition according to Claim 1, in which component (c) is a halogenated biphenyl.

8. A composition according to Claim 1, in which component (c) is a halogen containing benzene compound.

9. A composition according to Claim 1, in which component (c) is hexabromobenzene.

10. A composition according to Claim 1, in which component (c) is a halogenated biphenyl ether.

11. A composition according to Claim 1, in which component (c) is hexabromodiphenyl oxide, decabromodiphenyl oxide, or a brominated mixture of diphenyl and diphenyl ether.

12. A composition according to Claim 1, in which component (c) is a halogenated diphenyl carbonate.

13. A composition according to Claim 1, in which component (c) is decabromodiphenyl carbonate or decachlorodiphenyl carbonate.

14. A composition according to Claim 1, in which component (c) is a halogenated carboxylic acid anhydride.

15. A composition according to Claim 1, in which component (c) is tetrabromophthalic anhydride.

16. A composition according to Claim 1, in which component (c) is a halogenated carboxylic acid imide.

17. A composition according to Claim 1, in which component (c) is tetrabromophthalimide.

18. A composition according to Claim 1, which contains components (a) and (b) in a weight ratio of between 99:1 and 1:99.

19. A composition according to Claim 18, in which the weight ratio is between 90:10 and 10:90.

20. A composition according to Claim 19, in which the weight ratio is between 80:20 and 20:80.

21. A composition according to Claim 20, in which the weight ratio is between 70:30 and 30:70.

22. A composition according to Claim 1, which contains from about 1 to about 25 parts by weight of (c), based on 100 parts of (a) and (b) combined.

23. A composition according to Claim 22, which contains from about 3 to about 15 parts by weight of (c), based on 100 parts of (a) and (b) combined.

24. An article prepared from the composition of Claim 1.

25. An article prepared from the composition of Claim 3.

26. An article prepared from the composition of Claim 6.

27. An article prepared from the composition of Claim 7.

28. An article prepared from the composition of Claim 8.

29. An article prepared from the composition of Claim 10.

30. An article prepared from the composition of Claim 12.

31. An article prepared from the composition of Claim 14.

32. An article prepared from the composition of Claim 16.